# EUROPÄISCHE PATENTSCHRIFT

(11) **EP 2 791 008 B1**
(45) Veröffentlichungstag und Bekanntmachung des Hinweises auf die Patenterteilung: **17.05.2017**
(21) Anmeldenummer: 12799077.8
(22) Anmeldetag: 10.12.2012
(51) Int. Cl.: B05B 13/00, B05B 13/04, B05B 15/12, B25J 5/02, B25J 9/00, B25J 11/00

(54) **BESCHICHTUNGSANLAGE UND ENTSPRECHENDES BETRIEBSVERFAHREN**
COATING DEVICE AND CORRESPONDING METHOD
DISPOSITIF DE REVÊTEMENT ET PROCÉDÉ CORRESPONDANT

(30) Priorität: 16.12.2011 DE 102011121343
(43) Veröffentlichungstag der Anmeldung: 22.10.2014
(73) Patentinhaber: Dürr Systems AG, 74321 Bietigheim-Bissingen (DE)
(72) Erfinder: HEUSCHEN, Wulf, 71686 Remseck-Hochberg (DE); KMITTA, Hartmut, 71254 Ditzingen (DE); FURMANNEK, Marc, 70193 Stuttgart (DE)
(74) Vertreter: v. Bezold & Partner Patentanwälte - PartG mbB
(86) Internationale Anmeldenummer: PCT/EP2012/005091
(87) Internationale Veröffentlichungsnummer: WO 2013/087186

(56) Entgegenhaltungen:
- EP-A1- 1 609 532
- WO-A2-2010/104972
- US-A- 4 768 462

## Beschreibung

Die Erfindung betrifft eine Beschichtungsanlage zum Beschichten von Bauteilen, insbesondere zum Lackieren von Flugzeugbauteilen. Weiterhin betrifft die Erfindung ein entsprechendes Betriebsverfahren.

Beim Lackieren von Flugzeugbauteilen müssen sowohl Großbauteile (z.B. Tragflächen) als auch Kleinbauteile (z.B. Landeklappen, Winkel, Bleche, Ösen, Halter, Schüttgut) lackiert werden, wobei die Großbauteile einerseits und die Kleinbauteile andererseits räumlich getrennt voneinander in separaten Lackierkabinen lackiert werden. So sind die Lackierkabinen für die Lackierung von Tragflächen an die Abmessungen der zu lackierenden Tragflächen angepasst und weisen deshalb eine äußerst große Länge auf, wohingegen die Lackierkabinen zum Lackieren der Kleinbauteile wesentlich kleiner sind.

Nachteilig an diesen bekannten Lackieranlagen zum Lackieren von Flugzeugbauteilen ist die Stillstandszeit des Lackierroboters in der großen Lackierkabine, die zum Lackieren der Großbauteile verwendet wird. Zwischen den einzelnen Lackiervorgängen in der großen Lackierkabine steht der dort installierte Lackierroboter nämlich jeweils über einen relativ langen Zeitraum still. Dieser Lackierroboter verursacht jedoch trotzdem erhebliche Investitions- und Betriebskosten.

Aus DD 241 374 A1 ist eine mobile Spritzanlage für zähflüssige Lösungen (z.B. Bitumen) bekannt, bei der das Beschichtungsgerät zwischen zwei benachbarten Beschichtungskabinen wechseln kann. Der Wechsel zwischen den beiden benachbarten Beschichtungskabinen ist hierbei jedoch zeitlich aufwändig und erfolgt mittels mehrerer kreuzender Verfahrachsen, was äußerst aufwändig ist. Unabhängig davon gehört diese Druckschrift einem anderen technischen Gebiet (Bitumenauftrag) an.

Ferner ist zum Stand der Technik hinzuweisen auf DE 10 2008 045 553 A1, DE 690 05 404 T2, DE 690 05 577 T2, DE 195 41 409 A1, DE 43 14 615 C1, DE 103 21 924 A1, DE 93 18 217 U1, US 2007/0095279 A1, JP 06165959A und DE 10 2006 032 804 A1.

Aus WO 2010/104972 A2 ist eine Beschichtungsanlage gemäß dem Oberbegriff des Anspruchs 1 bekannt. Hierbei sind die Förderer für die zu beschichtenden Bauteile jedoch in einer Linie hintereinander angeordnet. Zum einen hat dies den Nachteil, dass keiner beiden Förderer als Durchlaufförderer ausgebildet sein kann. Zum anderen führt diese Bauweise aber auch zu einer sehr großen Gesamtbaulänge der Lackieranlage.

Schließlich ist zum Stand der Technik noch hinzuweisen auf EP 1 609 532 A1 und US 4 768 462.

Der Erfindung liegt deshalb die Aufgabe zugrunde, die vorstehend beschriebene bekannte Lackieranlage entsprechend zu verbessern.

Diese Aufgabe wird durch eine erfindungsgemäße Beschichtungsanlage und durch ein entsprechendes Betriebsverfahren gemäß den unabhängigen Ansprüchen gelöst.

Die Erfindung umfasst die allgemeine technische Lehre, einen Beschichtungsroboter entlang einer Verfahrachse zwischen verschiedenen Beschichtungskabinen zu verfahren, so dass der Beschichtungsroboter wahlweise in einer der Beschichtungskabinen Bauteile beschichten kann. Dadurch werden die Stillstandszeiten des verfahrbaren Beschichtungsroboters deutlich verringert, da der Beschichtungsroboter jeweils in der Beschichtungskabine eingesetzt werden kann, in der gerade Bauteile beschichtet werden sollen.

Die Erfindung umfasst also eine Beschichtungsanlage mit einer ersten Beschichtungskabine, die insbesondere zum Beschichten von Flugzeugbauteilen dient und beispielsweise aufgrund ihrer großen Abmessungen zum Beschichten von Tragflächen verwendet werden kann.

Darüber hinaus weist die erfindungsgemäße Beschichtungsanlage mindestens eine zweite Beschichtungskabine auf, die vorzugsweise wesentlich geringere Abmessungen hat als die erste Beschichtungskabine und beispielsweise zur Beschichtung von Kleinbauteilen (z.B. Landeklappen, Winkel, Bleche, Ösen, Halter, Schüttgut) von Flugzeugen dienen kann.

Darüber hinaus umfasst die erfindungsgemäße Beschichtungsanlage einen mehrachsigen Beschichtungsroboter, der ein Beschichtungsgerät positioniert, was an sich aus dem Stand der Technik bekannt ist. Bei dem Beschichtungsroboter handelt es sich vorzugsweise um einen mehrachsigen Beschichtungsroboter mit einer seriellen Kinematik mit beispielsweise sechs Roboterachsen. Die Erfindung ist jedoch hinsichtlich der Anzahl der Roboterachsen des Beschichtungsroboters nicht auf sechs Roboterachsen beschränkt, sondern auch mit einer anderen Anzahl von Roboterachsen realisierbar. Beispielsweise kann der Beschichtungsroboter im Rahmen der Erfindung 3, 4, 5, 6, 7 oder sogar 8 Roboterachsen aufweisen. Darüber hinaus besteht im Rahmen der Erfindung die Möglichkeit, dass der Beschichtungsroboter anstelle der seriellen Kinematik oder zusätzlich dazu eine Parallelkinematik aufweist. Die Verwendung eines mehrachsigen Beschichtungsroboters bietet den Vorteil, dass der von dem Beschichtungsgerät (z.B. Rotationszerstäuber) abgegebene Sprühstrahl des Beschichtungsmittels (z.B. Lack) auch bei gekrümmten Bauteiloberflächen immer rechtwinklig zur Bauteiloberfläche bzw. parallel zur Flächennormale ausgerichtet werden kann.

Bei dem Beschichtungsgerät handelt es sich - wie bereits vorstehend kurz erwähnt - vorzugsweise um einen Rotationszerstäuber, wie er an sich aus dem Stand der Technik bekannt ist. Im Rahmen der Erfindung sind jedoch auch andere Typen von Zerstäubern als Beschichtungsgerät einsetzbar, wie beispielsweise Druckluftzerstäuber, Airless-Geräte, Airmix-Geräte oder Ultraschall-Zerstäuber.

Weiterhin ist zu erwähnen, dass sich die erfindungsgemäße Beschichtungsanlage sowohl zur Applikation von Pulverlack als auch zur Applikation von Nasslack eignet. Ferner ist zu erwähnen, dass sich mit der erfindungsgemäßen Beschichtungsanlage wahlweise Lösemittellacke oder Wasserlacke applizieren lassen. Hierbei besteht auch die Möglichkeit, dass Einkomponentenlacke oder Mehrkomponentenlacke appliziert werden, die beispielsweise 2, 3, 4 oder sogar 5 verschieden Lackkomponenten aufweisen können.

Darüber hinaus weist die erfindungsgemäße Beschichtungsanlage eine Verfahrachse auf, entlang welcher der Beschichtungsroboter verfahren werden kann, wobei derartige Verfahrachsen ebenfalls aus dem Stand der Technik bekannt sind. So handelt es sich bei der Verfahrachse in der Regel um eine Schienenanordnung, auf der der Beschichtungsroboter verfahren werden kann. Hierbei ist zu erwähnen, dass die Verfahrachse vorzugsweise linear ausgerichtet ist, um eine lineare Verfahrbewegung des Beschichtungsroboters entlang der Verfahrachse zu ermöglichen. Die Verfahrachse kann jedoch grundsätzlich auch gekrümmt sein, um eine kurvenförmige Verfahrbewegung des Beschichtungsroboters entlang der Verfahrachse zu ermöglichen.

Die Erfindung sieht nun vor, dass sich die Verfahrachse von der ersten Beschichtungskabine bis in die zweite Beschichtungskabine erstreckt, so dass der Beschichtungsroboter wahlweise in der ersten Beschichtungskabine oder in der zweiten Beschichtungskabine Bauteile beschichten kann. Beispielsweise kann der Beschichtungsroboter zunächst in der ersten Beschichtungskabine positioniert werden, um dort Großbauteile (z.B. Tragflächen) zu beschichten. In der Pause zwischen den Beschichtungen von zwei derartigen Großbauteilen kann der Beschichtungsroboter dann entlang der Verfahrachse in die zweite Beschichtungskabine verfahren werden und dort Kleinbauteile (z.B. Landeklappen, Winkel, Bleche, Ösen, Halter, Schüttgut) beschichten. Auf diese Weise kann der Beschichtungsroboter auch in den Beschichtungspausen zwischen den Beschichtungen von zwei Großbauteilen eingesetzt werden, um Kleinbauteile in der anderen Beschichtungskabine zu beschichten, wodurch die Stillstandszeiten des Beschichtungsroboters wesentlich verringert werden. Bei der erfindungsgemäßen Beschichtungsanlage ist der zeitliche Auslastungsgrad des Beschichtungsroboters also wesentlich besser als bei der eingangs beschriebenen herkömmlichen Beschichtungsanlage.

Darüber hinaus weist die erfindungsgemäße Beschichtungsanlage Förderer auf, um die zu beschichtenden Bauteile in die jeweilige Beschichtungskabine einzufördern bzw. auszufördern. Hierbei kommen verschiedene Typen von Förderern in Frage, wie beispielsweise Hängeförderer, Horizontalförderer oder Transferstationen, die an sich aus dem Stand der Technik bekannt sind und deshalb nicht näher beschrieben werden müssen.

Ferner ist an dieser Stelle zu erwähnen, dass es sich bei den Förderern um Stetigförderer mit einem stetigen Bauteilfluss handeln kann oder um Unstetigförderer, die auch einen Stopand-Go-Betrieb ermöglichen.

Weiterhin besteht im Rahmen der Erfindung die Möglichkeit, dass es sich bei zumindest einem der Förderer um einen unidirektionalen Förderer handelt, der die Bauteile nur in einer Förderrichtung durch die jeweilige Beschichtungskabine fördert, so dass die Bauteile durch einen Einlauf in die jeweilige Beschichtungskabine eintreten und durch einen gegenüberliegenden Auslauf aus der jeweiligen Beschichtungskabine austreten.

Alternativ besteht die Möglichkeit, dass es sich bei zumindest einem der Förderer um einen bidirektionalen Förderer handelt, so dass die Bauteile in einer Förderrichtung in die jeweilige Beschichtungskabine eintreten und in einer entgegengesetzten Förderrichtung aus der jeweiligen Beschichtungskabine austreten.

Hinsichtlich der geometrischen Anordnung der Beschichtungskabinen, der Förderer und der Verfahrachse bestehen verschiedene Möglichkeiten, von denen einige im Folgenden kurz beschrieben werden.

So ist der erste Förderer quer zu dem zweiten Förderer ausgerichtet, insbesondere rechtwinklig hierzu. Bei einer solchen Anordnung ist vorzugsweise auch die Verfahrachse für den Beschichtungsroboter entlang dem ersten Förderer ausgerichtet, insbesondere parallel hierzu. Darüber hinaus ist die Verfahrachse hierbei vorzugsweise quer zu dem zweiten Förderer ausgerichtet, insbesondere rechtwinklig hierzu.

Bei einer solchen orthogonalen Anordnung der Beschichtungskabinen und der zugehörigen Förderer können sich der zweite Förderer und die Verfahrachse für den Beschichtungsroboter kreuzen. Die Verfahrachse für den Beschichtungsroboter verläuft deshalb vorzugsweise angehoben über dem zweiten Förderer, so dass die zu beschichtenden Bauteile von dem zweiten Förderer unter der Verfahrachse für den Beschichtungsroboter hindurch gefördert werden können. Dies kann beispielsweise dadurch technisch realisiert werden, dass die Verfahrachse in Form einer angehobenen Schiene ("Elevated Rail") angeordnet ist.

Bei dem bevorzugten Ausführungsbeispiel der Erfindung weist die erste Beschichtungskabine für die Beschichtung von Großbauteilen eine Seitenwand auf, wobei die Verfahrachse für den Beschichtungsroboter an der Seitenwand der Beschichtungskabine angebracht ist. Eine Möglichkeit hierzu besteht darin, dass die Seitenwand der Beschichtungskabine selbst eine tragende Struktur bildet und deshalb die Verfahrachse für den Beschichtungsroboter tragen kann. Eine andere Möglichkeit besteht dagegen darin, dass an der Außenseite der Seitenwand eine tragende Struktur für die Verfahrachse vorgesehen ist, wobei die Seitenwand der Beschichtungskabine dann lediglich eine Trennwand bildet, ohne eine tragende Funktion zu übernehmen.

Es wurde bereits vorstehend erwähnt, dass die erste Beschichtungskabine vorzugsweise zur Beschichtung von Großbauteilen (z.B. Tragflächen) von Flugzeugen dient und deshalb hinsichtlich ihrer Abmessungen an derartige Großbauteile angepasst ist. Bei der ersten Beschichtungskabine ist deshalb die Kabinenlänge vorzugsweise wesentlich größer als die Kabinenbreite, wobei die Kabinenlänge vorzugsweise größer ist als 10 m, 12 m oder sogar 15 m. Darüber hinaus ist zu erwähnen, dass die erste Beschichtungskabine vorzugsweise wesentlich größer ist als die zweite Beschichtungskabine, da die erste Beschichtungskabine vorzugsweise zur Beschichtung von Großbauteilen dient, wohingegen in der zweiten Beschichtungskabine vorzugsweise Kleinbauteile (z.B. Landeklappen, Winkel, Bleche, Ösen, Halter, Schüttgut) beschichtet werden. Darüber hinaus ist die erste Beschichtungskabine vorzugsweise wesentlich höher als die zweite Beschichtungskabine. So kann die erste Beschichtungskabine beispielsweise eine Höhe aufweisen, die größer ist als 5 m, 6 m oder sogar 7 m, wohingegen die zweite Beschichtungskabine eine Höhe aufweisen kann, die kleiner ist als 6 m, 5 m, oder sogar kleiner als 4 m.

Ferner ist zu erwähnen, dass die beiden Beschichtungskabinen der erfindungsgemäßen Beschichtungsanlage unmittelbar aneinander angrenzen können. Es besteht jedoch alternativ auch die Möglichkeit, dass die beiden Beschichtungskabinen räumlich voneinander getrennt sind, wobei der Abstand zwischen den beiden Beschichtungskabinen von der gemeinsamen Verfahrachse überbrückt wird.

Bei einer unmittelbar aneinander angrenzenden Anordnung der verschiedenen Beschichtungskabinen ist zwischen den Beschichtungskabinen vorzugsweise eine Trennung vorgesehen, jedoch besteht auch die Möglichkeit eines offenen Übergangs von der einen Beschichtungskabine in die angrenzende andere Beschichtungskabine. Die vorstehend erwähnte Trennung der benachbarten Beschichtungskabinen kann beispielsweise durch ein Tor (z.B. Rolltor, Schiebetor, etc.) erfolgen, das wahlweise pneumatisch, hydraulisch oder elektrisch angetrieben werden kann. Weiterhin besteht die Möglichkeit, dass die aneinander angrenzenden Beschichtungskabinen durch eine Luftschleuse voneinander getrennt sind.

Der im Rahmen der Erfindung verwendete Begriff einer Beschichtungskabine stellt vorzugsweise auf eine im Wesentlichen geschlossene Beschichtungskabine ab, die bis auf Einlauf bzw. Auslauf geschlossen ist. Der im Rahmen der Erfindung verwendete Begriff einer Beschichtungskabine ist jedoch allgemein zu verstehen und umfasst auch Bearbeitungsstationen, die zumindest teilweise offen sind.

In dem bevorzugten Ausführungsbeispiel der Erfindung weist die Beschichtungsanlage eine Kabinenlüftung auf, die gemeinsam für die verschiedenen Beschichtungskabinen zuständig ist und deren Belüftung bzw. Entlüftung übernimmt. Hinsichtlich der Belüftung bzw. Entlüftung der Beschichtungskabinen bestehen im Rahmen der Erfindung verschiedene Möglichkeiten, wie beispielsweise ein sogenanntes Horizontalplenum oder eine herkömmliche Filterdecke, die in Segmente unterteilt sein können. Anstelle eines sogenannten Horizontalplenums kann auch ein sogenanntes Vertikalplenum zum Einsatz kommen oder es können sogenannte Wurfdüsen eingesetzt werden.

Darüber hinaus weist die erfindungsgemäße Beschichtungsanlage in dem bevorzugten Ausführungsbeispiel eine Farbversorgung auf, welche gemeinsam die verschiedenen Beschichtungskabinen mit dem Beschichtungsmittel (z.B. Lack einer bestimmten Farbe) versorgt.

Ferner ist vorzugsweise eine zentrale Versorgungseinrichtung vorgesehen, um überschüssiges Beschichtungsmittel ("Overspray") aus den verschiedenen Beschichtungskabinen zu entsorgen. Hinsichtlich der technischen Realisierung der Entsorgungseinrichtung bestehen im Rahmen der Erfindung verschiedene Möglichkeiten. So lassen sich beispielsweise Trocken-Einwegfilter, Trocken-Sinterfilter ("Dry Scrubber") einsetzen oder die Nass-Venturi-Technik kann zum Einsatz kommen, wie auch der Einsatz einer sogenannten Nass-Wanne möglich ist.

Darüber hinaus kann die erfindungsgemäße Beschichtungsanlage eine zusätzliche Trocknungsstation aufweisen, wobei hinsichtlich der technischen Realisierung einer solchen Trocknungsstation verschiedene Möglichkeiten bestehen. Beispielsweise kann eine Umluft-Konvektions-Trocknung, eine Infrarot-Trocknung, eine Infrarot-Konvektionstrocknung oder eine sonstige Trocknung eingesetzt werden.

Hinsichtlich der räumlichen Position der Entsorgungseinrichtung bestehen im Rahmen der Erfindung ebenfalls verschiedene Möglichkeiten. Beispielsweise kann die Entsorgungseinrichtung in einem Kabinenboden der Beschichtungskabine angeordnet sein, wobei sich die Entsorgungseinrichtung wahlweise nur über einen Teil des Kabinenbodens oder über den gesamten Kabinenboden erstrecken kann. Alternativ besteht die Möglichkeit, dass die Entsorgungseinrichtung in der Seitenwand der Beschichtungskabine angeordnet ist, wobei sich die Entsorgungseinrichtung wiederum wahlweise nur über einen Teil der Seitenwand oder über die gesamte Seitenwand erstrecken kann.

Neben der vorstehend beschriebenen erfindungsgemäßen Beschichtungsanlage umfasst die Erfindung auch ein entsprechendes Betriebsverfahren, bei dem der Beschichtungsroboter auf der Verfahrachse zwischen den verschiedenen Beschichtungskabinen verfahren wird, um nacheinander Bauteile in den verschiedenen Beschichtungskabinen zu beschichten.

Ferner ist zu erwähnen, dass die Erfindung nicht beschränkt ist auf die Beschichtung von Flugzeugbauteilen. Vielmehr eignet sich das erfindungsgemäße Konzept auch zur Beschichtung von anderen Bauteilen, wie beispielsweise Kraftfahrzeug-Karosseriebauteile, Bauteile von Windkraftwerken (z.B. Rotorblätter), etc.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Figur 1A: eine schematische Darstellung einer erfindungsgemäßen Beschichtungsanlage zur Lackierung von Flugzeugbauteilen,
- Figur 1B: eine schematische Darstellung der Beschichtungsanlage aus Figur 1A mit einer Overspray-Entsorgung, einer Kabinenbelüftung und einer Farbversorgung,
- Figur 2: das erfindungsgemäße Betriebsverfahren in Form eines Flussdiagramms.

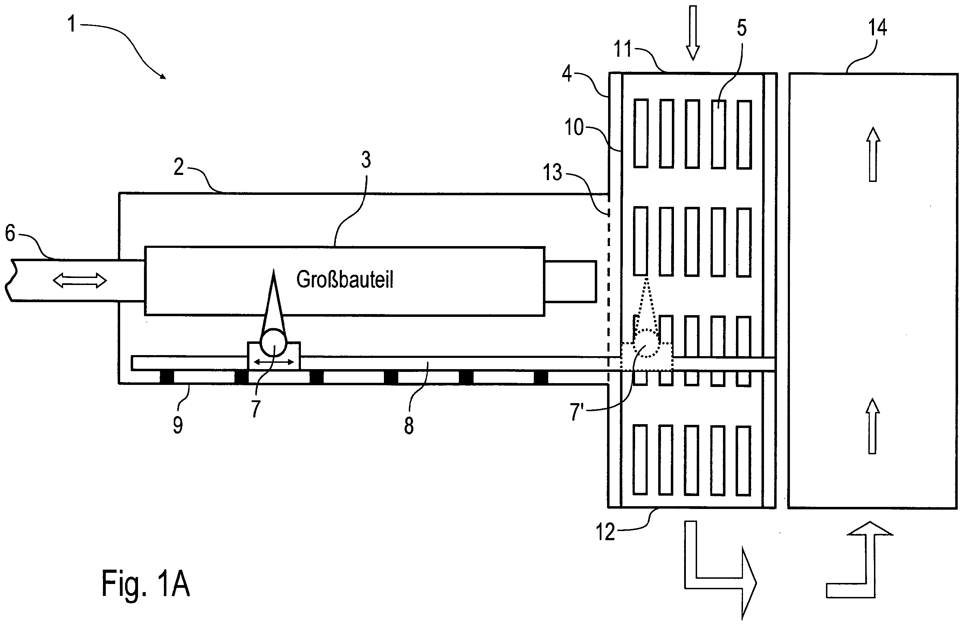

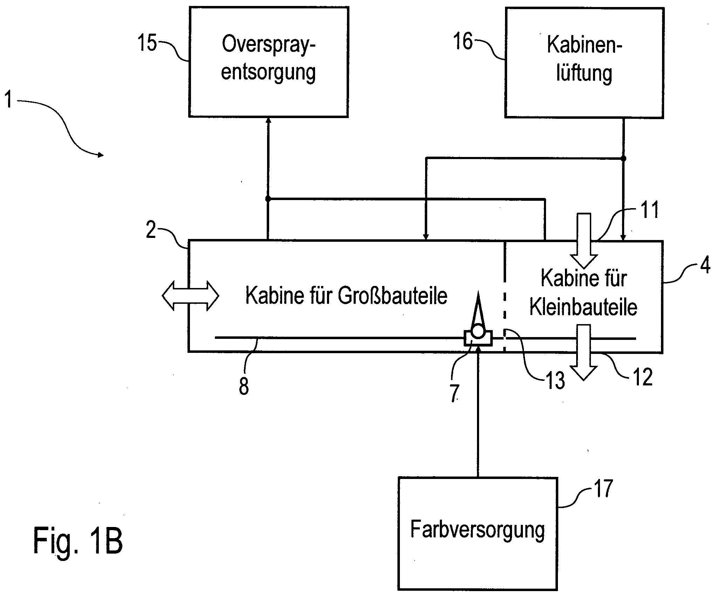

Die Figuren 1A und 1B zeigen eine erfindungsgemäße Lackieranlage 1 zur Lackierung von Flugzeugbauteilen mit einer ersten Lackierkabine 2 zur Lackierung von Großbauteilen 3 (z.B. Tragflächen) und einer zweiten Lackierkabine 4 zur Lackierung von Kleinbauteilen 5 (z.B. Landeklappen, Winkel, Bleche, Ösen, Halter, Schüttgut).

Die Lackierkabine 2 ist in ihren Abmessungen an die zu lackierenden Großbauteile 3 angepasst und weist deshalb eine relativ große Kabinenlänge von ungefähr 15 m und eine Kabinenhöhe von 7 m bei einer Kabinenbreite von 5 m auf.

Die andere Lackierkabine 4 ist dagegen in ihren Abmessungen wesentlich kleiner entsprechend den Dimensionen der zu lackierenden Kleinbauteile 5.

Darüber hinaus weist die erfindungsgemäße Lackieranlage 1 einen Förderer 6 auf, um die Großbauteile 3 in die Lackierkabine 2 einzufördern und nach einem Beschichtungsvorgang wieder aus der Lackierkabine 2 auszufördern.

Ferner weist die Lackieranlage 1 einen Lackierroboter 7 auf, der entlang einer Verfahrschiene 8 zwischen den beiden Lackierkabinen 2, 4 verfahrbar ist, so dass der Lackierroboter 7 wahlweise die Großbauteile 3 in der Lackierkabine 2 oder die Kleinbauteile 5 in der Lackierkabine 4 lackieren kann. Zum Lackieren der Kleinbauteile 5 in der Lackierkabine 4 wird der Lackierroboter 7 deshalb entlang der Verfahrschiene 8 in eine gestrichelt gezeichnete Position 7' verfahren, die in der Lackierkabine 4 liegt.

Die Verfahrschiene 8 für den Lackierroboter 7 ist an einer Seitenwand 9 der Lackierkabine 2 angebracht und erstreckt sich aus der ersten Lackierkabine 2 bis in die Lackierkabine 4, damit der Lackierroboter 7 dort die Kleinbauteile 5 lackieren kann.

Durch die Lackierkabine 4 verläuft ein Förderer 10, der die Kleinbauteile 5 durch einen Einlauf 11 in die Lackierkabine 4 einfördert und die Kleinbauteile 5 durch einen Auslauf 12 wieder aus der Lackierkabine 4 ausfördert.

Die Verfahrschiene 8 für den Lackierroboter 7 verläuft in der Lackierkabine 4 rechtwinklig zu dem Förderer 10, so dass sich die Verfahrschiene 8 und der Förderer 10 in der Lackierkabine 4 kreuzen. Die Verfahrschiene 8 ist deshalb gegenüber dem Förderer 10 nach oben versetzt, so dass die Kleinbauteile 5 auf dem Förderer 10 unter der Verfahrschiene 8 hindurch gefördert werden können.

Zwischen den beiden Lackierkabinen 2, 4 befindet sich eine Trennung 13, die beispielsweise aus einem Rolltor, einem Schiebetor oder einer Luftschleuse bestehen kann, was an sich aus dem Stand der Technik bekannt ist und deshalb nicht näher beschrieben werden muss.

Darüber hinaus weist die Lackieranlage optional eine Trocknungsstation 14 auf, um die Kleinbauteile 5 nach der Lackierung in der Lackierkabine 4 zu trocknen, wobei die Trocknungsstation 14 in herkömmlicher Weise ausgebildet sein kann.

Weiterhin ist zu erwähnen, dass die Lackieranlage 1 eine zentrale Overspray-Entsorgung 15 aufweist, die sowohl für die Lackierkabine 2 als auch für die Lackierkabine 4 zuständig ist und überschüssiges Beschichtungsmittel ("Overspray") aus den beiden Lackierkabinen 2, 4 entsorgt.

Darüber hinaus weist die Lackieranlage 1 auch eine zentrale Kabinenlüftung 16 auf, die sowohl für die Lackierkabine 2 als auch für die Lackierkabine 4 zuständig ist und in den Lackierkabinen 2, 4 für eine ausreichende Belüftung und Entlüftung sorgt, wobei die Belüftung bzw. Entlüftung an sich in herkömmlicher Weise erfolgen kann und deshalb nicht näher beschrieben werden muss.

Schließlich weist die Lackieranlage 1 auch eine zentrale Farbversorgung 17 auf, die sowohl für die Lackierkabine 2 als auch für die Lackierkabine 4 zuständig ist.

Vorteilhaft an der Lackieranlage 1 ist die Tatsache, dass der Lackierroboter 7 sowohl in der Lackierkabine 2 als auch in der Lackierkabine 4 eingesetzt werden kann, so dass die Stillstandszeiten des Lackierroboters 7 in Beschichtungspausen reduziert werden, was zu einer Verringerung der Investitions- und Betriebskosten führt.

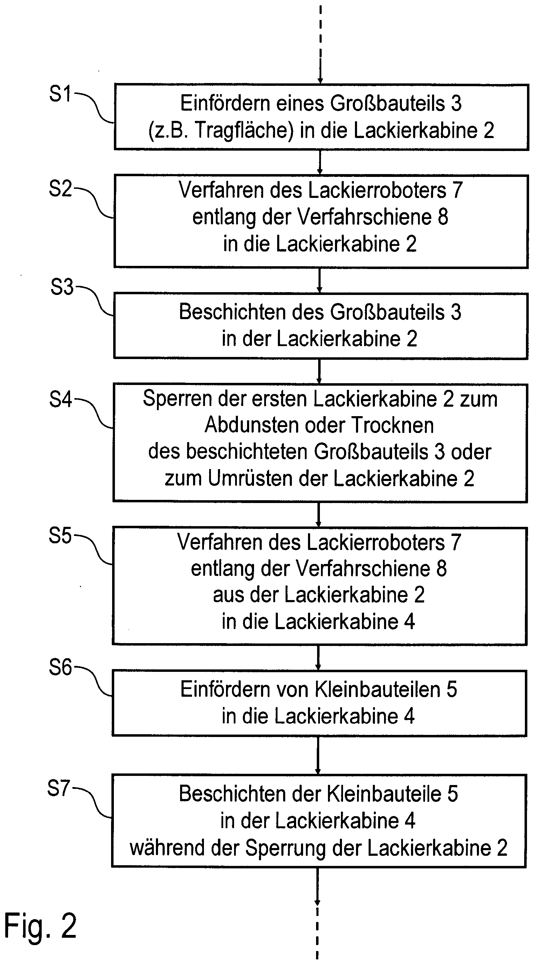

Im Folgenden wird nun unter Bezugnahme auf das Flussdiagramm in Figur 2 das erfindungsgemäße Betriebsverfahren der Lackieranlage 1 beschrieben.

In einem ersten Schritt S1 wird zunächst das Großbauteil 3 in die Lackierkabine 2 eingefördert (Schritt S1).

Anschließend wird dann der Lackierroboter 7 entlang der Verfahrschiene 8 in die Lackierkabine 2 verfahren (Schritt S2).

Daraufhin wird dann das Großbauteil 3 von dem Lackierroboter 7 in der Lackierkabine 2 lackiert (Schritt S3).

Nach der Fertigstellung der Lackierung des Großbauteils 3 in der Lackierkabine 2 wird dann die Lackierkabine 2 für eine sofortige weitere Lackierung gesperrt, damit das beschichtete Großbauteil 3 in der Lackierkabine 2 abdunsten oder trocknen kann. Darüber hinaus kann die Sperrung der Lackierkabine 2 auch erfolgen, um die Lackierkabine 2 umrüsten zu können (Schritt S4).

Anschließend wird der Lackierroboter 7 dann entlang der Verfahrschiene 8 aus der Lackierkabine 2 in die andere Lackierkabine 4 verfahren (Schritt S5).

Weiterhin werden dann Kleinbauteile 5 von dem Förderer 10 in die Lackierkabine 4 eingefördert (Schritt S6).

Schließlich werden die Kleinbauteile 5 dann in der Lackierkabine 4 von dem Lackierroboter 7 lackiert (Schritt S7).

Die Erfindung ist nicht auf die vorstehend beschriebenen bevorzugten Ausführungsbeispiele sondern auf den Schutzumfang der beiliegenden Ansprüche beschränkt.

### Bezugszeichenliste:

- 1: Lackieranlage
- 2: Lackierkabine
- 3: Großbauteil
- 4: Lackierkabine
- 5: Kleinbauteile
- 6: Förderer
- 7: Lackierroboter
- 7': Alternative Position des Lackierroboters
- 8: Verfahrschiene
- 9: Seitenwand
- 10: Förderer
- 11: Einlauf
- 12: Auslauf
- 13: Trennung
- 14: Trocknungsstation
- 15: Overspray-Entsorgung
- 16: Kabinenlüftung
- 17: Farbversorgung

## Patentansprüche

1. Beschichtungsanlage (1) zum Beschichten von Bauteilen, insbesondere zum Lackieren von Flugzeugbauteilen, mit
a) einer ersten Beschichtungskabine (2), insbesondere zum Beschichten von großen Flugzeugbauteilen (3),
b) einem mehrachsigen Beschichtungsroboter (7), der ein Beschichtungsgerät positioniert, insbesondere einen Rotationszerstäuber,
c) einer zweiten Beschichtungskabine (4), insbesondere zum Beschichten von kleinen Flugzeugbauteilen (5),
d) einer Verfahrachse (8) zum Verfahren des Beschichtungsroboters (7) entlang der Verfahrachse (8), wobei die Verfahrachse (8) innerhalb der ersten Beschichtungskabine (2) verläuft und sich bis in die zweite Beschichtungskabine (4) erstreckt, so dass der Beschichtungsroboter (7) wahlweise in der ersten Beschichtungskabine (2) oder in der zweiten Beschichtungskabine (4) Bauteile (3, 5) beschichten kann,
e) einem ersten Förderer (6) zum Einfördern der zu beschichtenden Bauteile (3) in die erste Beschichtungskabine (2) und/oder zum Ausfördern der zu beschichtenden Bauteile (3) aus der ersten Beschichtungskabine (2),
f) einem zweiten Förderer (10) zum Einfördern der zu beschichtenden Bauteile (5) in die zweite Beschichtungskabine (4) und/oder zum Ausfördern der zu beschichtenden Bauteile (5) aus der zweiten Beschichtungskabine (4),
**dadurch gekennzeichnet,**
g) **dass** der erste Förderer (6) quer zu dem zweiten Förderer (10) ausgerichtet ist, insbesondere rechtwinklig.

2. Beschichtungsanlage (1) nach Anspruch 1,
**dadurch gekennzeichnet,**
a) **dass** der erste Förderer (6) und/oder der zweite Förderer (10) ein unidirektionaler Förderer ist, der die Bauteile (3, 5) nur in einer Förderrichtung durch die jeweilige Beschichtungskabine (2, 4) fördert, so dass die Bauteile (5) durch einen Einlauf (11) in die jeweilige Beschichtungskabine (4) eintreten und durch einen gegenüber liegenden Auslauf (12) aus der jeweiligen Beschichtungskabine (4) austreten, und/oder
b) **dass** der erste Förderer (6) und/oder der zweite Förderer (10) ein bidirektionaler Förderer ist, so dass die Bauteile (3) in einer Förderrichtung in die jeweilige Beschichtungskabine (2) eintreten und in einer entgegengesetzten Förderrichtung aus der jeweiligen Beschichtungskabine (2) austreten.

3. Beschichtungsanlage (1) nach Anspruch 1 oder 2, **dadurch gekennzeichnet,**
a) **dass** die Verfahrachse (8) für den Beschichtungsroboter (7) entlang dem ersten Förderer (6) ausgerichtet ist, insbesondere parallel, und/oder
b) **dass** die Verfahrachse (8) für den Beschichtungsroboter (7) quer zu dem zweiten Förderer (10) ausgerichtet ist, insbesondere rechtwinklig, und/oder
c) **dass** der zweite Förderer (10) und die Verfahrachse (8) für den Beschichtungsroboter (7) einander kreuzen, und/oder
d) **dass** die Verfahrachse (8) für den Beschichtungsroboter (7) über dem zweiten Förderer (10) verläuft, so dass die zu beschichtenden Bauteile (5) von dem zweiten Förderer (10) unter der Verfahrachse (8) für den Beschichtungsroboter (7) hindurch gefördert werden können.

4. Beschichtungsanlage (1) nach einem der vorhergehenden Ansprüche, **dadurch gekennzeichnet,**
a) **dass** die erste Beschichtungskabine (2) eine Seitenwand (9) aufweist,
b) **dass** die Verfahrachse (8) für den Beschichtungsroboter (7) an der Seitenwand (9) der ersten Beschichtungskabine (2) angebracht ist.

5. Beschichtungsanlage (1) nach einem der vorhergehenden Ansprüche, **dadurch gekennzeichnet,**
a) **dass** die erste Beschichtungskabine (2) eine bestimmte Kabinenlänge entlang der Verfahrachse (8) des Beschichtungsroboters (7) und eine bestimmte Kabinenbreite quer zu der Verfahrachse (8) des Beschichtungsroboters (7) aufweist, und/oder
b) **dass** bei der ersten Beschichtungskabine (2) die Kabinenlänge wesentlich größer ist als die Kabinenbreite, und/oder
c) **dass** die erste Beschichtungskabine (2) eine Kabinenlänge von mindestens 10, 12 oder 15m aufweist, und/oder
d) **dass** die erste Beschichtungskabine (2) größer ist als die zweite Beschichtungskabine (4), um Großteile in der ersten Beschichtungskabine (2) und Kleinteile in der zweiten Beschichtungskabine (4) zu beschichten, und/oder
e) **dass** die erste Beschichtungskabine (2) wesentlich höher ist als die zweite Beschichtungskabine (4).

6. Beschichtungsanlage (1) nach einem der vorhergehenden Ansprüche, **gekennzeichnet durch**
a) eine Trennung (13) zwischen der ersten Beschichtungskabine (2) und der zweiten Beschichtungskabine (4), oder
b) eine offenen Übergang von der ersten Beschichtungskabine (2) zu der zweiten Beschichtungskabine (4).

7. Beschichtungsanlage (1) nach Anspruch 7, **dadurch gekennzeichnet, dass** die Trennung (13) zwischen der ersten Beschichtungskabine (2) und der zweiten Beschichtungskabine (4)
a) ein Rolltor,
b) eine Luftschleuse oder
c) ein Schiebetor aufweist.

8. Beschichtungsanlage (1) nach einem der vorhergehenden Ansprüche, **dadurch gekennzeichnet,**
a) **dass** die erste Beschichtungskabine (2) und/oder die zweite Beschichtungskabine (4) bis auf einen Einlauf (11) und/oder einen Auslauf (12) im Wesentlichen geschlossen ist, oder
b) **dass** die erste Beschichtungskabine (2) und/oder die zweite Beschichtungskabine (4) zumindest teilweise offen ist.

9. Beschichtungsanlage (1) nach einem der vorhergehenden Ansprüche, **gekennzeichnet durch**
a) eine Kabinenlüftung (16), die sowohl die erste Beschichtungskabine (2) als auch die zweite Beschichtungskabine (4) belüftet und/oder entlüftet, und/oder
b) eine Farbversorgung (17), die sowohl die erste Beschichtungskabine (2) als auch die zweite Beschichtungskabine (4) mit dem Beschichtungsmittel versorgt, und/oder
c) eine Entsorgungseinrichtung (15) zum Entsorgen von Overspray sowohl aus der ersten Beschichtungskabine (2) als auch aus der zweiten Beschichtungskabine (4).

10. Betriebsverfahren für eine Beschichtungsanlage (1) mit einer ersten Beschichtungskabine (2) und einer zweiten Beschichtungskabine (4) und einem auf einer Verfahrachse (8) verfahrbaren Beschichtungsroboter (7), mit den folgenden Schritten:
a) Einfördern der zu beschichtenden Bauteile (3) in die erste Beschichtungskabine (2) und/oder Ausfördern der zu beschichtenden Bauteile (3) aus der ersten Beschichtungskabine (2) mittels eines ersten Förderers (6),
b) Einfördern der zu beschichtenden Bauteile (5) in die zweite Beschichtungskabine (4) und/oder zum Ausfördern der zu beschichtenden Bauteile (5) aus der zweiten Beschichtungskabine (4) mittels eines zweiten Förderers (10),
c) Verfahren des Beschichtungsroboters (7) entlang der Verfahrachse (8) zwischen der ersten Beschichtungskabine (2) und der zweiten Beschichtungskabine (4),
d) Beschichten von Bauteilen (3, 5) mittels des Beschichtungsroboters (7) wahlweise in der ersten Beschichtungskabine (2) oder in der zweiten Beschichtungskabine (4),
**dadurch gekennzeichnet,**
e) **dass** der erste Förderer (6) quer zu dem zweiten Förderer (10) ausgerichtet ist, insbesondere rechtwinklig.

11. Betriebsverfahren nach Anspruch 10, **dadurch gekennzeichnet, dass** der Beschichtungsroboter (7) nacheinander Bauteile (3, 5) in der ersten Beschichtungskabine (2) und in der zweiten Beschichtungskabine (4) beschichtet.

12. Betriebsverfahren nach einem der Ansprüche 10 bis 11, **dadurch gekennzeichnet,**
a) **dass** zunächst ein Bauteil (3) in der ersten Beschichtungskabine (2) beschichtet wird, insbesondere ein Großbauteil,
b) **dass** die erste Beschichtungskabine (2) anschließend für eine sofortige weitere Beschichtung für eine Sperrzeit gesperrt wird, insbesondere zum Abdunsten oder Trocknen des in der ersten Beschichtungskabine (2) beschichteten Bauteils oder zum Umrüsten der ersten Beschichtungskabine (2),
c) **dass** der Beschichtungsroboter (7) nach dem Beschichten in der ersten Beschichtungskabine (2) entlang der Verfahrachse (8) in die zweite Beschichtungskabine (4) verfahren wird,
d) **dass** der Beschichtungsroboter (7) dann während der Sperrzeit der ersten Beschichtungskabine (2) ein Bauteil (5) in der zweiten Beschichtungskabine (4) beschichtet.

## Claims

1. Coating installation (1) to coat components, in particular to paint aircraft components, with
a) a first coating booth (2), in particular to coat large aircraft components (3),
b) a multi-axis coating robot (7) which positions a coating device, in particular a rotary atomizer,
c) a second coating booth (4), in particular to coat small aircraft components (5),
d) a travel axis (8) to move the coating robot (7) along the travel axis (8), whereby the travel axis (8) runs within the first coating booth (2) and extends into the second coating booth (4) so that the coating robot (7) can coat components (3, 5) either in the first coating booth (2) or in the second coating booth (4),
e) a first conveyer (6) to convey the components (3) to be coated into the first coating booth (2) and/or to convey the components (3) to be coated (3) out of the first coating booth (2),
f) a second conveyer (10) to convey the components (5) to be coated (5) into the second coating booth (4) and/or to convey the components (5) to be coated out of the second coating booth (4),
**characterised in that**
g) the first conveyer (6) is aligned transversely to the second conveyer (10), in particular at right angles.

2. Coating installation (1) in accordance with Claim 1, **characterised in that**
a) the first conveyer (6) and/or the second conveyer (10) is a unidirectional conveyer which conveys the components (3, 5) in only one conveying direction through the respective coating booth (2, 4) so that the components (5) enter the respective coating booth (4) through an inlet (11) and exit the respective coating booth (4) through an opposite outlet (12), and/or
b) the first conveyer (6) and/or the second conveyer (10) is a bidirectional conveyer so that the components (3) enter the respective coating booth (2) in one conveying direction and exit the respective coating booth (2) in an opposite conveying direction.

3. Coating installation (1) in accordance with Claim 1 or 2, **characterised in that**
a) the travel axis (8) for the coating robot (7) is aligned along the first conveyer (6), in particular parallel to it, and/or
b) the travel axis (8) for the coating robot (7) is aligned transversely to the second conveyer (10), in particular at right angles, and/or
c) the second conveyer (10) and the travel axis (8) for the coating robot (7) cross each other, and/or
d) the travel axis (8) for the coating robot (7) runs above the second conveyer (10) so that the components to be coated (5) may be conveyed by the second conveyer (10) beneath the travel axis (8) for the coating robot (7).

4. Coating installation (1) in accordance with one of the preceding claims 2 to 4, **characterised in that**
a) the first coating booth (2) has a side wall (9),
b) the travel axis (8) for the coating robot (7) is attached to the side wall (9) of the first coating booth (2).

5. Coating installation (1) in accordance with one of the prior Claims, **characterised in that**
a) the first coating booth (2) has a certain booth length along the travel axis (8) of the coating robot (7) and a certain booth width transversely to the travel axis (8) of the coating robot (7), and/or
b) in the case of the first coating booth (2), the booth length is considerably greater than the booth width, and/or
c) the first coating booth (2) has a booth length of at least 10, 12 or 15m, and/or
d) the first coating booth (2) is larger than the second coating booth (4) in order to coat large components in the first coating booth (2) and small components in the second coating booth (4), and/or
e) the first coating booth (2) is considerably higher than the second coating booth (4).

6. Coating installation (1) in accordance with one of the prior Claims, **characterised by**
a) a partition (13) between the first coating booth (2) and the second coating booth (4), or
b) an open transition from the first coating booth (2) to the second coating booth (4).

7. Coating installation (1) in accordance with Claim 7, **characterised in that** the partition (13) between the first coating booth (2) and the second coating booth (4) has
a) a roller door,
b) an airlock, or
c) a sliding door.

8. Coating installation (1) in accordance with one of the prior Claims, **characterised in that**
a) the first coating booth (2) and/or the second coating booth (4) is essentially closed with the exception of an inlet (11) and/or an outlet (12), or
b) the first coating booth (2) and/or the second coating booth (4) is at least partially open.

9. Coating installation (1) in accordance with one of the prior Claims, **characterised by**
a) a booth ventilation (16) which ventilates both the first coating booth (2) and the second coating booth (4), and/or
b) a paint supply (17) which supplies both the first coating booth (2) and the second coating booth (4) with the coating agent, and/or
c) a disposal unit (15) to dispose overspray both from the first coating booth (2) and from the second coating booth (4).

10. Operating method for a coating installation (1) with a first coating booth (2) and a second coating booth (4) and a coating robot (7) which can move on a travel axis (8), comprising the following steps:
a) Conveying the components (3) to be coated into the first coating booth (2) and/or or conveying the components (3) to be coated out of the first coating booth (2) by means of a first conveyor (6),
b) Conveying the components (5) to be coated into the second coating booth (4) and/or or conveying the components (5) to be coated out of the second coating booth (4) by means of a second conveyor (10),
c) Moving the coating robot (7) along a travel axis (8) between the first coating booth (2) and the second coating booth (4),
d) Coating of components (3, 5) by the coating robot (7) optionally in the first coating booth (2) or in the second coating booth (4),
**characterised in that**
e) the first conveyer (6) is aligned transversely to the second conveyer (10), in particular at right angles.

11. Operating method in accordance with Claim 10, **characterised in that** the coating robot (7) coats components (3, 5) consecutively in the first coating booth (2) and in the second coating booth (4).

12. Operating method in accordance with one of the Claims 10 to 11, **characterised in that**
a) firstly a component (3) is coated in the first coating booth (2), in particular a large component,
b) the first coating booth (2) is then blocked for an immediate further coating for a blocking time, in particular for flashing off or drying of the component coated in the first coating booth (2) or to convert the first coating booth (2),
c) the coating robot (7) is moved along the travel axis (8) into the second coating booth (4) after coating in the first coating booth (2),
d) the coating robot (7) then coats a component (5) in the second coating booth (4) during the blocking time for the first coating booth (2).

## Revendications

1. Installation de revêtement (1) pour le revêtement de composants, en particulier pour la mise en peinture de composants d'avion, avec
a) une première cabine de revêtement (2), en particulier pour le revêtement de grands composants d'avion (3),
b) un robot de revêtement (7) multiaxe qui positionne un appareil de revêtement, en particulier un pulvérisateur rotatif,
c) une deuxième cabine de revêtement (4), en particulier pour le revêtement de petits composants d'avion (5),
d) un axe de translation (8) pour le déplacement du robot de revêtement (7) le long de l'axe de translation (8), l'axe de translation (8) se situant à l'intérieur de la première cabine de revêtement (2) et s'étendant jusque dans la deuxième cabine de revêtement (4) de telle sorte que le robot de revêtement (7) peut revêtir des composants (3, 5) au choix dans la première cabine de revêtement (2) ou dans la deuxième cabine de revêtement (4),
e) un premier convoyeur (6) pour l'introduction des composants (3) à revêtir dans la première cabine de revêtement (2) et/ou pour l'extraction des composants (3) à revêtir à partir de la première cabine de revêtement (2),
f) un deuxième convoyeur (10) pour l'introduction des composants (5) à revêtir dans la deuxième cabine de revêtement (4) et/ou pour l'extraction des composants (5) à revêtir à partir de la deuxième cabine de revêtement (4),
**caractérisée en ce que**
g) le premier convoyeur (6) est orienté transversalement au deuxième convoyeur (10), en particulier à angle droit.

2. Installation de revêtement (1) selon la revendication 1, **caractérisée en ce que**
a) le premier convoyeur (6) et/ou le deuxième convoyeur (10) est un convoyeur unidirectionnel qui convoie les composants (3, 5) uniquement dans une direction de convoyage à travers la cabine de revêtement (2, 4) respective de telle sorte que les composants (5) entrent dans la cabine de revêtement (4) respective par une entrée (11) et sortent de la cabine de revêtement (4) respective par une sortie (12) située en face, et/ou
b) le premier convoyeur (6) et/ou le deuxième convoyeur (10) est un convoyeur bidirectionnel, de telle sorte que les composants (3) entrent dans la cabine de revêtement (2) respective dans une direction de convoyage et sortent de la cabine de revêtement (2) respective dans une direction de convoyage opposée.

3. Installation de revêtement (1) selon la
revendication 1 ou 2,
**caractérisée en ce que**
a) l'axe de translation (8) pour le robot de revêtement (7) est orienté le long du premier convoyeur (6), en particulier parallèlement, et/ou
b) l'axe de translation (8) pour le robot de revêtement (7) est orienté transversalement au deuxième convoyeur (10), en particulier à angle droit, et/ou
c) le deuxième convoyeur (10) et l'axe de translation (8) pour le robot de revêtement (7) se croisent, et/ou
d) l'axe de translation (8) pour le robot de revêtement (7) passe au-dessus du deuxième convoyeur (10) de telle sorte que les composants (5) à revêtir peuvent être convoyés par le deuxième convoyeur (10) en traversant sous l'axe de translation (8) pour le robot de revêtement (7).

4. Installation de revêtement (1) selon l'une des revendications précédentes, **caractérisée en ce que**
a) la première cabine de revêtement (2) présente une paroi latérale (9),
b) l'axe de translation (8) pour le robot de revêtement (7) est mis en place sur la paroi latérale (9) de la première cabine de revêtement (2).

5. Installation de revêtement (1) selon l'une des revendications précédentes, **caractérisée en ce que**
a) la première cabine de revêtement (2) présente une longueur de cabine définie le long de l'axe de translation (8) du robot de revêtement (7) et une largeur de cabine définie transversalement à l'axe de translation (8) du robot de revêtement (7), et/ou
b) dans la première cabine de revêtement (2), la longueur de cabine est nettement plus grande que la largeur de cabine, et/ou
c) la première cabine de revêtement (2) présente une longueur de cabine d'au moins 10, 12 ou 15 m, et/ou
d) la première cabine de revêtement (2) est plus grande que la deuxième cabine de revêtement (4), pour revêtir des grandes pièces dans la première cabine de revêtement (2) et des petites pièces dans la deuxième cabine de revêtement (4), et/ou
e) la première cabine de revêtement (2) est nettement plus haute que la deuxième cabine de revêtement (4).

6. Installation de revêtement (1) selon l'une des revendications précédentes, **caractérisée par**
a) une séparation (13) entre la première cabine de revêtement (2) et la deuxième cabine de revêtement (4), ou
b) une transition ouverte de la première cabine de revêtement (2) vers la deuxième cabine de revêtement (4).

7. Installation de revêtement (1) selon la revendication 7, **caractérisée en ce que** la séparation (13) entre la première cabine de revêtement (2) et la deuxième cabine de revêtement (4) présente
a) un volet roulant,
b) un sas à air ou
c) une porte coulissante.

8. Installation de revêtement (1) selon l'une des revendications précédentes, **caractérisée en ce que**
a) la première cabine de revêtement (2) et/ou la deuxième cabine de revêtement (4) est essentiellement fermée à l'exception d'une entrée (11) et/ou d'une sortie (12), ou
b) la première cabine de revêtement (2) et/ou la deuxième cabine de revêtement (4) sont au moins partiellement ouvertes.

9. Installation de revêtement (1) selon l'une des revendications précédentes, **caractérisée par**
a) une ventilation de cabine (16) qui aère et/ou désaère aussi bien la première cabine de revêtement (2) que la deuxième cabine de revêtement (4), et/ou
b) une alimentation en peinture (17) qui alimente en agent de revêtement aussi bien la première cabine de revêtement (2) que la deuxième cabine de revêtement (4), et/ou
c) un système d'élimination (15) pour l'élimination de l'overspray aussi bien à partir de la première cabine de revêtement (2) que de la deuxième cabine de revêtement (4).

10. Procédé de fonctionnement pour une installation de revêtement (1) avec une première cabine de revêtement (2) et une deuxième cabine de revêtement (4) et un robot de revêtement (7) déplaçable sur un axe de translation (8), avec les étapes suivantes :
a) introduction des composants (3) à revêtir dans la première cabine de revêtement (2) et/ou extraction des composants (3) à revêtir à partir de la première cabine de revêtement (2) au moyen d'un premier convoyeur (6),
b) introduction des composants (5) à revêtir dans la deuxième cabine de revêtement (4) et/ou extraction des composants (5) à revêtir à partir de la deuxième cabine de revêtement (4) au moyen d'un deuxième convoyeur (10),
c) déplacement du robot de revêtement (7) le long de l'axe de translation (8) entre la première cabine de revêtement (2) et la deuxième cabine de revêtement (4),
d) revêtement de composants (3, 5) au moyen du robot de revêtement (7) au choix dans la première cabine de revêtement (2) ou dans la deuxième cabine de revêtement (4),
**caractérisé en ce que**
e) le premier convoyeur (6) est orienté transversalement au deuxième convoyeur (10), en particulier à angle droit.

11. Procédé de fonctionnement selon la revendication 10, **caractérisé en ce que** le robot de revêtement (7) revêt successivement des composants (3, 5) dans la première cabine de revêtement (2) et dans la deuxième cabine de revêtement (4).

12. Procédé de fonctionnement selon l'une des revendications 10 à 11, **caractérisé en ce que**
a) d'abord un composant (3) est revêtu dans la première cabine de revêtement (2), en particulier un grand composant,
b) la première cabine de revêtement (2) est ensuite bloquée pour un autre revêtement immédiat pendant une durée de blocage, en particulier pour l'évaporation ou le séchage du composant revêtu dans la première cabine de revêtement (2) ou pour le changement d'équipement de la première cabine de revêtement (2),
c) le robot de revêtement (7), après le revêtement dans la première cabine de revêtement (2), est déplacé le long de l'axe de translation (8) vers la deuxième cabine de revêtement (4),
d) le robot de revêtement (7), pendant la durée de blocage de la première cabine de revêtement (2), revêt ensuite un composant (5) dans la deuxième cabine de revêtement (4).
